# EUROPÄISCHE PATENTSCHRIFT

(11) **EP 2 793 362 B1**
(45) Veröffentlichungstag und Bekanntmachung des Hinweises auf die Patenterteilung: **17.06.2015**
(21) Anmeldenummer: 13163688.8
(22) Anmeldetag: 15.04.2013
(51) Int. Cl.: H02K 1/24, H02K 15/02

(54) **Reluktanzmotor und zugehöriger Rotor**
Reluctance motor and corresponding rotor
Moteur à reluctance et rotor associé

(43) Veröffentlichungstag der Anmeldung: 22.10.2014
(73) Patentinhaber: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE); Wolf, Nico, 98596 Trusetal (DE)

(56) Entgegenhaltungen:
- EP-A1- 0 141 187
- EP-A2- 2 442 432
- WO-A1-99/33156
- WO-A1-2011/018119
- DE-A1-102011 079 843
- US-A- 5 801 478

## Beschreibung

Die Erfindung betrifft einen Rotor für einen Reluktanzmotor, einen Reluktanzmotor mit einem solchen Rotor, ein Kraftfahrzeug sowie ein Verfahren zum Herstellen des genannten Rotors. Der Rotor weist mehrere elektrisch voneinander isolierte Einzelbleche auf, die zu einem Blechpaket aufeinander gestapelt sind.

Ein Rotor für einen Reluktanzmotor ist aus der US 5,818,140 A bekannt. Darin ist ein Rotor beschrieben, dessen Blechpaket aus Rotorblechen besteht, die Ausstanzungen aufweisen. Dieser Rotor ist hier auch als Vagati-Rotor bezeichnet. Durch die Ausstanzungen ergeben sich geschwungene, streifenförmige Blechabschnitte, die als Flussleitabschnitte dienen und den magnetischen Fluss in der für die Bereitstellung der nötigen Reluktanz des Rotors nötigen Weise führen. Zwischen den einzelnen Flussleitabschnitten befindet sich durch die Ausstanzungen Luft, d.h. ein unmagnetischer Bereich, der als magnetische Flusssperre wirkt. Durch die streifenförmigen Flussleitabschnitte ergibt sich eine hohe Drehmomentausbeute. Die Reaktanz des Blechpakets ist in Richtung der q-Achse, d.h. der magnetischen Sperrrichtung aufgrund der unmagnetischen Bereiche verhältnismäßig klein. Die streifenförmigen Flussleitabschnitte verlaufen quer zu der q-Achse und verbinden in Umfangsrichtung benachbarte Pole des Rotors, also die d-Achsen. Die Ausstanzungen zum Bereitstellen der unmagnetischen Bereiche bzw. zum Ausbilden der Flussleitabschnitte führen aber zu einer Schwächung der mechanischen Stabilität des Blechpakets, so dass der beschriebene Rotor nicht für große Drehzahlen, insbesondere nicht für Drehzahlen größer als 3.000 Umdrehungen/Minute geeignet ist. Aus diesem Grund sind Reluktanzrotoren der beschriebenen Art nicht für die Drehzahlanforderung im Bereich von Kraftfahrzeugen mit elektrischen Antrieben geeignet.

Aus der WO 2011/018119 A1 ist ein Rotor für eine Reluktanzmaschine bekannt, der aus voneinander beabstandeten Flussleitabschnitten besteht, die mit ihren axialen Enden an Trägerscheiben befestigt sind, welche die Flussleitabschnitte gegen radial wirkende Fliehkräfte fixieren.

Aus der US 5 801 478 A ist eine Reluktanzmaschine bekannt, bei welcher zwischen magnetisch leitfähigen Rotorblechen Fixierplatten angeordnet sind, sodass sich aus den Rotorblechen und den Fixierplatten insgesamt eine Sandwichanorndung ergibt.

Aus der DE 10 2011 079 843 A1 ist eine elektrische Maschine in massenarmer Bauart mit magnetisch aktiven Teilen bekannt, bei der die magnetisch aktiven, scheibenförmigen Teile in axialer Richtung gestapelt sind und hierbei zwischen jeweils zwei magentisch aktiven Teilen eine magnetisch inaktive Schicht als Abstandshalter angeordnet ist.

Der Erfindung liegt die Aufgabe zugrunde, einen Rotor der eingangs bezeichneten Art anzugeben, der sowohl ein hohes Drehmoment als auch eine hohe Drehzahl ermöglicht, so dass er insbesondere als Bestandteil eines elektrischen Antriebs für ein Elektrofahrzeug geeignet ist.

Die Aufgabe wird durch einen Rotor gemäß Patentanspruch 1, einen Reluktanzmotor gemäß Patentanspruch 10, ein Kraftfahrzeug gemäß Patentanspruch 11 sowie ein Verfahren gemäß Patentanspruch 12 gelöst. Vorteilhafte Weiterbildungen der Erfindung sind durch die Unteransprüche gegeben.

Der erfindungsgemäße Rotor ist ein Reluktanzrotor, d.h. er ist für einen Reluktanzmotor vorgesehen. In bekannter Weise weist der erfindungsgemäße Rotor also ein Blechpaket auf, also einen Stapel aus mehreren elektrisch voneinander isolierten, weichmagnetischen Rotorblechen, die sich jeweils radial von einer Rotationsachse des Rotors weg erstrecken. Mit anderen Worten sind die Rotorbleche entlang der Rotationsachse aufgefädelt oder aufgeschichtet. Der erfindungsgemäße Rotor orientiert sich an den eingangs beschriebenen Reluktanzrotor von Vagati (US 5,818,140 A). Jede Schicht des Blechpakets weist also ein magnetisch leitfähiges Rotorblech auf, wobei durch beispielsweise Ausstanzungen mehrere Flussleitabschnitte für einen magnetischen Fluss gebildet sind. Die Flussleitabschnitte sind insbesondere in der bekannten Art streifenförmig und/oder verbinden zwei in Umfangsrichtung benachbarte d-Achsen des Rotors. Die Flussleitabschnitte sind jeweils voneinander durch einen unmagnetischen Bereich getrennt, also beispielsweise die ausgestanzten Aussparungen. Die unmagnetischen Bereiche wirken als magnetische Flusssperren und erstrecken sich bevorzugt jeweils zwischen zwei in Umfangsrichtung benachbarten q-Achsen des Rotors. Unter magnetisch wird hier insbesondere ferromagnetisch, bevorzugt weichmagnetisch, verstanden. Entsprechend wird unter unmagnetisch oder amagnetisch wird hier nicht-ferromagnetisch, insbesondere nichtweichmagnetisch verstanden. Die unmagnetischen Bereiche sind hierzu insbesondere jeweils mit Luft oder einem Polymer, insbesondere Kunstharz, gefüllt.

Bei einer Rotation des Rotors wirken Fliehkräfte auf die einzelnen Flussleitabschnitte, die diese einzelnen Bereiche des Rotorblechs von der Rotationsachse weg radial nach außen wirken. Durch die unmagnetischen Bereiche, also beispielsweise die Ausstanzungen, ist die mechanische Belastbarkeit des Rotors aber geschwächt.

Um diese mechanische Schwächung durch das Vorsehen der unmagnetischen Bereiche auszugleichen, ist bei dem erfindungsgemäßen Rotor zwischen zwei oder mehreren der Schichten, also der Rotorbleche, jeweils eine Einlegscheibe angeordnet, beispielsweise eine Folie aus einem Polymer. Diese Einlegscheibe weist nicht die für die Rotorbleche charakteristischen Ausstanzungen auf, sondern überbrückt im Gegenteil diese unmagnetischen Bereiche. Hierbei ist die Einlegscheibe jeweils mit zumindest zwei der Flussleitabschnitte eines der Rotorbleche oder auch beider Rotorbleche, zwischen denen die Einlegscheibe angeordnet ist, fest verbunden. Hierdurch sind diese Flussleitabschnitte durch die Einlegscheibe über den zwischen ihnen befindlichen unmagnetischen Bereich hinweg miteinander verbunden.

Der erfindungsgemäße Rotor weist so den Vorteil auf, dass ein Flussleitabschnitt, der sich in radialer Richtung (von der Rotationsachse) weiter außen befindet als ein anderer Flussleitabschnitt und der deshalb eine größere Fliehkraft erfährt als der weiter innen liegende Flussleitabschnitt, nun einen Teil der Fliehkraft über die Einlegscheibe auf den weiter innen liegenden Flussleitabschnitt als Zugkraft ableiten kann. Hierdurch werden die außen am Rotor wirkenden, verhältnismäßig großen Fliehkräfte radial nach innen auf das gesamte Blechpaket verteilt. Dies führt zu einer mechanischen Stabilisierung des Rotors.

Durch die Anzahl der Einlegeteile in dem Blechpaket kann eine modulare Drehzahleignung eingestellt werden. Für höchste Stabilität sind hierbei Einlegescheiben zwischen jedem Blech vorgesehen, für geringere Drehzahlfestigkeit beispielsweise zwischen jedem zweiten oder jedem dritten Blech.

Das erfindungsgemäße Verfahren dient zum Herstellen einer Ausführungsform des erfindungsgemäßen Rotors. Zum Bilden jeder magnetischen Schicht des Blechpakets wird jeweils ein magnetisch leitfähiges Blech bereitgestellt. Jedes Blech weist dabei die beschriebenen, streifenförmigen Flussleitabschnitte einer Schicht auf. Hierzu kann das Blech beispielsweise gestanzt sein, so dass sich die unmagnetischen Bereiche als Aussparungen ergeben. Um nun das Blechpaket herzustellen, werden die Bleche zu dem Blechpaket aufgefädelt und hierbei zwischen zumindest zwei der Bleche, insbesondere zwischen allen Blechen oder zumindest jedem zweiten oder dritten Blech jeweils eine Einlegescheibe angeordnet und mit zumindest einem der angrenzenden Bleche verbunden.

Bis hierhin wurde der Rotor in der Weise beschrieben, dass das Blechpaket des Rotors jeweils aus aufeinander geschichteten einzelnen Rotorblechen gebildet ist, die jeweils eine Schicht des Blechpakets bilden. Es gibt aber eine Ausführungsform der Erfindung, bei der jede Schicht nicht aus einem einzigen Rotorblech mit Aussparungen gebildet ist, sondern zumindest eine der Schichten mehrere, voneinander getrennte Rotorbleche aufweist, von denen jedes einen der Flussleitabschnitte der Schicht bildet. Diese einzelnen Flussleitabschnitte sind also nicht untereinander durch weichmagnetische Bereiche verbunden. Ansonsten ist aber auch diese Ausführungsform des erfindungsgemäßen Rotors in der soeben beschriebenen Weise mit zumindest einer Einlegscheibe zwischen zwei der Schichten aufgebaut. Ohne die weichmagnetischen Verbindungen zwischen den Flussleitabschnitten ergibt sich eine besonders große Reluktanz.

Um ein solches Blechpaket herzustellen, bei dem jede Schicht aus mehreren einzelnen, voneinander getrennten Flussleitabschnitten gebildet ist, sieht eine Ausführungsform des Verfahrens vor, nach dem Stapeln der Bleche einen Außenring, welches die einzelnen Flussleitabschnitte zusammenhält, so dass sich ein einzelnes Blechstück ergibt, durch ein spanendes Verfahren zu entfernen und hierdurch jedes der Bleche, also jede Schicht des Blechpakets, in mehrere voneinander getrennte Rotorbleche aufzutrennen.

Jede Einlegscheibe ist bevorzugt aus einem unmagnetischen Material gebildet. Hierdurch ergibt sich der Vorteil, dass durch das Vorsehen der Einlegscheiben die magnetischen Eigenschaften des Rotors nicht beeinflusst werden. Dies stellt einen weiteren großen Vorteil gegenüber dem Stand der Technik dar, bei welchem die Flussleitabschnitte durch Blechstege miteinander verbunden werden müssen, um die mechanische Stabilität zu gewährleisten.

Eine andere Ausführungsform sieht vor, dass zumindest eine Einlegscheibe, bevorzugt alle Einlegscheiben, ein mit einem Kunstharz vergossenes Gewirke oder Gewebe umfasst. Als Gewirke kann hier beispielsweise ein Vlies oder ein Filz vorgesehen sein. Als Fasern für das Gewirke bzw. Gewebe können Glasfasern oder Kohlefasern verwendet werden. Mittels eines Gewirkes bzw. Gewebes aus Fasern ergibt sich eine besonders hohe Zugfestigkeit der Einlegscheibe, wie sie zum Übertragen der Fliehkräfte zwischen den einzelnen Flussleitabschnitten gewünscht ist. Das Vergießen mit Kunstharz sorgt hierbei für die nötige mechanische Steifigkeit.

Um eine Einlegscheibe mit den beiden Schichten, zwischen denen sie sich befindet, fest zu verbinden, ist gemäß einer Ausführungsform ein Verkleben der Einlegscheibe mit den Flussleitabschnitten vorgesehen. Eine Klebeschicht ist sehr dünn, so dass sich durch das Verkleben keine nennenswerte Zunahme der Dicke der Einlegscheibe ergibt. Bei Verwendung von Kunstharz kann dieses auch als Kleber fungieren.

Bei einem Rotor für einen Reluktanzmotor eines Kraftfahrzeugs, aber auch in anderen Einsatzgebieten, muss der Rotor abwechselnd in beide Drehrichtungen betreibbar sein. Um hierbei für beide Drehrichtungen insbesondere bei einer Beschleunigung ein gegenseitiges Verdrehen der Blechpakete zu verhindern, wie es durch das Anordnen von Einlegscheiben zwischen den Blechpaketen ermöglicht sein kann, weist eine erste Ausführungsform des Rotors Einlegscheiben auf, die ein Gewebe mit Fasern umfasst, die zu einer bestimmungsgemäßen q-Achse des Blechpakets in einem Winkel ausgerichtet sind, welcher in einem Bereich von 40° bis 50° bevorzugt bei 45°, liegt.

Gemäß einer zweiten Ausführungsform des Rotors ist die Einlegscheibe in dem unmagnetischen Bereich zwischen zwei Flussleitabschnitten, die sie verbindet, dicker als an den Stellen, wo sie mit den Flussleitabschnitten verbunden ist. Hierdurch ergibt sich in vorteilhafter Weise in radialer Richtung ein Formschluss zwischen der Einlegscheibe und den Flussleitabschnitten. Dies verhindert, dass die Flussleitabschnitte bei einer Rotation des Rotors entlang der Einlegscheibe radial nach außen rutschen.

Um die Einlegscheibe in der beschriebenen Weise zwischen den Flussleitabschnitten dicker auszugestalten kann beispielsweise vorgesehen sein, als Einlegscheibe ein Gewirke, beispielsweise ein Vlies, zwischen den Rotorblechen anzuordnen und anschließend, nachdem der gesamte Stapel aus Rotorblechen mit dazwischen eingelegten Einlegescheiben fertiggestellt ist, die Einlegescheiben mit einem flüssigen Kunstharz zu tränken. Hierdurch quillt dann das Gewirke zwischen den Flussleitabschnitten in den unmagnetischen Bereichen auf und wird so dicker. Nach Aushärten des Kunstharzes ergibt sich dann der gewünschte Formfluss. Es kann zum Ausbilden der dicken Abschnitte auch ein Gewebe mit Kunstharz getränkt werden und anschließend das Blechpaket mit axial zum Rotor hin wirkenden Kräften beaufschlagt werden.

Bevorzugt weisen die im Rotor angeordneten Einlegscheiben eine Dicke von weniger als 0,2 Millimeter auf. Bei vorgegebener axialer Gesamtlänge des Rotors führt das Vorsehen von mehreren Einlegscheiben, insbesondere bei einer Einlegscheibe zwischen jeder der Schichten, immer noch zu einem Rotor, der ausreichend magnetisch leitfähiges Material aufweist. So kann auch in diesem Fall nahezu das selbe mechanische Drehmoment mittels des Rotors erzeugt werden, wie es ohne Einlegscheiben erzeugt werden könnte.

Um eine solche dünne Einlegscheibe bereitzustellen, ist gemäß einer Ausführungsform vorgesehen, als Einlegscheibe eine Folie aus einem Polymer vorzusehen. Diese Folie kann selbstklebend sein, so dass sie auf eine der magnetischen Schichten des Blechpakets aufgeklebt werden kann und dann die nächste Schicht daraufgelegt werden kann.

Wie bereits ausgeführt gehört zu der Erfindung auch ein Reluktanzmotor. Der erfindungsgemäße Reluktanzmotor zeichnet sich durch einen Rotor aus, der eine Ausführungsform des erfindungsgemäßen Rotors ist. Bei dem erfindungsgemäßen Reluktanzmotor ist der Rotor dazu ausgelegt, durch das abwechselnde Bestromen den Rotor mit einer Drehzahl zu rotieren, welche größer als 5.000 Umdrehungen/Minute ist. Dies ist mit herkömmlichen Reluktanzmotoren, die nach dem Prinzip von Vagati gebildet sind, nicht möglich. Erst durch die erfindungsgemäße Stabilisierung des Blechpakets mittels der Stützelemente können diese Drehzahlen überschritten werden.

Der erfindungsgemäße Reluktanzmotor kann mit einem Umrichter zum abwechselnden Bestromen von Spulen eines Stators des Reluktanzmotors verbunden sein, wobei der Umrichter dazu ausgelegt ist, durch das abwechselnde Bestromen den Rotor mit einer Drehzahl zu rotieren, welche größer als 5000 U/min ist.

Der erfindungsgemäße Reluktanzmotor kann einen Umrichter aufweisen, mit dem in an sich bekannter Weise Spulen eines Rotors des Reluktanzmotors abwechselnd bestromt werden können.

Insbesondere ist vorgesehen, dass der Umrichter dazu ausgelegt ist, den Reluktanzmotor bei einer Drehzahl von mehr als 9.000 Umdrehungen/Minute zu rotieren.

Entsprechend ist das erfindungsgemäße Kraftfahrzeug dadurch gekennzeichnet, dass es einen Reluktanzmotor gemäß einer Ausführungsform des erfindungsgemäßen Reluktanzmotors aufweist. Erst mit einem solchen Reluktanzmotor mit ausreichend hoher Drehzahl ist eine sinnvolle Nutzung des Reluktanzmotors als Antriebsmotor für eine Fahrt des Kraftfahrzeugs möglich.

Die Erfindung ist im Folgenden anhand von Ausführungsbeispielen noch einmal näher erläutert. Hierzu zeigen:
- FIG 1: eine schematische Darstellung einer perspektivischen Ansicht einer Ausführungsform des erfindungsgemäßen Rotors,
- FIG 2: eine schematische Darstellung eines Längsschnitts durch eine Ausführungsform des erfindungsgemäßen Rotors,
- FIG 3: eine schematische Darstellung einer Frontalansicht einer Stirnseite einer Ausführungsform des erfindungsgemäßen Rotors,
- FIG 4: eine schematische Darstellung einer weiteren Frontalansicht einer Stirnseite einer Ausführungsform des erfindungsgemäßen Rotors,
- FIG 5: eine schematische Darstellung eines Längsschnitts durch eine Ausführungsform der erfindungsgemäßen elektrischen Maschine und
- FIG 6: eine schematische Darstellung einer Ausführungsform des erfindungsgemäßen Kraftfahrzeugs.

Bei den im Folgenden erläuterten Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Die dargestellten Ausführungsbeispiele stellen die bevorzugte Ausführungsform der Erfindung dar.

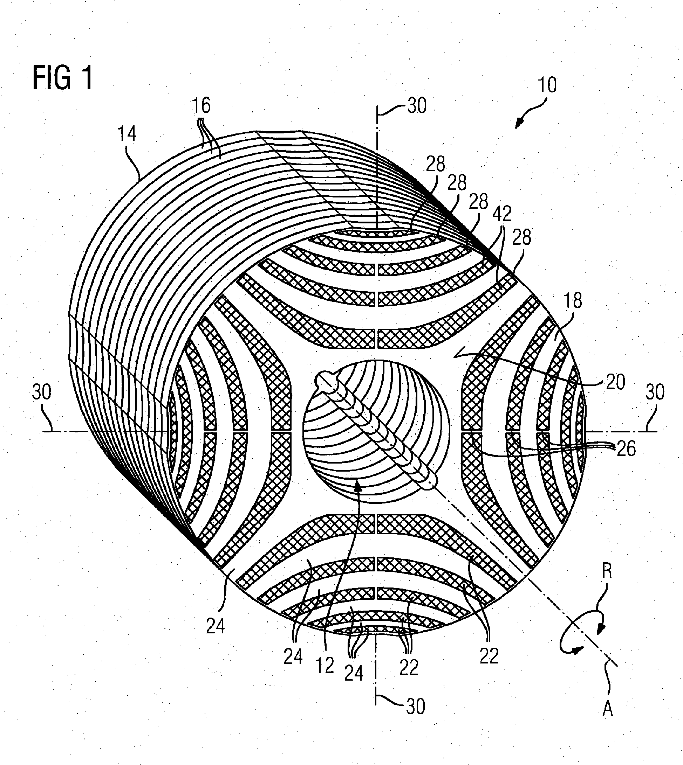

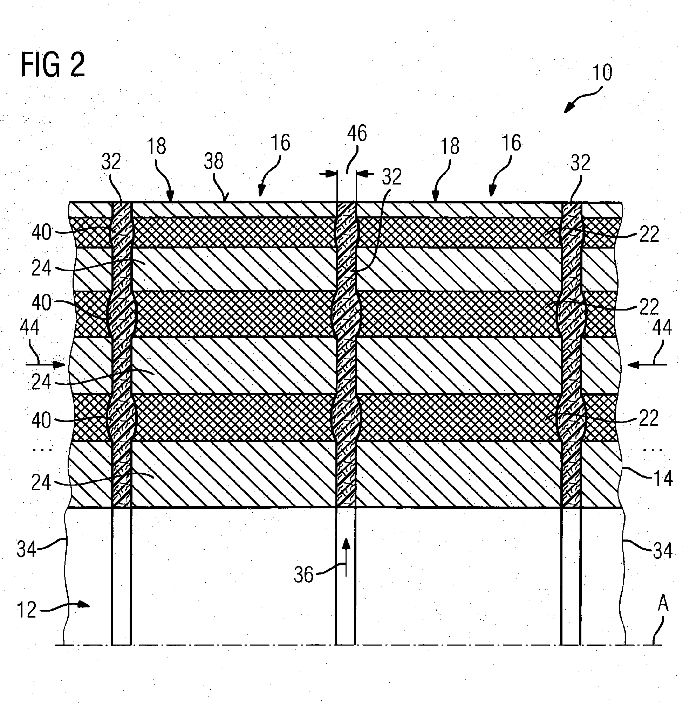

In FIG 1 und FIG 2 ist ein Reluktanzrotor oder kurz Rotor 10 gezeigt. Der Rotor 10 kann in einen Reluktanzmotor eingebaut sein. Beispielsweise kann der Reluktanzmotor ein Antriebsmotor für ein elektrisch angetriebenes Kraftfahrzeug sein. Im eingebauten Zustand ist durch eine Durchgangsöffnung 12 des Rotors 10 eine (nicht dargestellte) Welle des Reluktanzmotors gesteckt. Die Welle und damit der Rotor 10 ist dann um eine Rotationsachse A drehbar gelagert, so dass der Rotor 10 in einem (nicht dargestellten) Stator des Reluktanzmotors eine Rotation R um die Rotationsachse A vollführen kann. Ein Durchmesser des Rotors 10 in radialer Richtung kann mehr als 20 cm betragen. Eine Länge des Rotors 10 in axialer Richtung kann mehr als 30 cm betragen.

Der Rotor 10 weist als magnetisch aktiven Teil ein Blechpaket 14 auf, das aus mehreren Schichten 16 gebildet ist, die jeweils weichmagnetisches, insbesondere ferromagnetisches, Material aufweisen. Zwischen den Schichten befindet sich jeweils eine elektrisch isolierende Schicht, um Wirbelströme in dem Blechpaket 14 zu blockieren. Von den magnetischen Schichten 16 sind in der FIG 1 der Übersichtlichkeit halber nur einige mit einem Bezugszeichen versehen. Jede Schicht 16 ist in dem in FIG 1 und FIG 2 gezeigten Beispiel jeweils durch ein Rotorblech 18 gebildet. In der FIG 1 ist nur das Rotorblech 18, welches sich an einer Stirnseite 20 in axialer Richtung entlang der Achse A an einem vorderen Ende befindet, mit einem Bezugszeichen versehen. Das Rotorblech 18 (und entsprechend auch die übrigen Rotorbleche der übrigen Schichten 16) weist Aussparungen 22 auf, die magnetische Sperren bilden. Die Rotorbleche sind in der Weise fluchtend in dem Blechpaket axial hintereinander angeordnet, dass die Aussparungen 22 und entsprechend auch die Flussleitabschnitte 24 axial fluchten. Die Rotorbleche der Schichten 16 können alle die gleiche Form aufweisen. Die Aussparungen 22 können beispielsweise durch Ausstanzen der entsprechenden Formen aus Rotorblech 18 gebildet sein. Die Aussparungen 22 bilden unmagnetische Bereiche in jeder Schicht 16 und fungieren als magnetische Flusssperren.

Von dem Rotorblech 18 sind somit nur Flussleitabschnitte 24 und Stege 26 zum mechanischen Verbinden der Flussleitabschnitte 24 sowie ein Außenring 28 zum mechanischen Verbinden der Flussleitabschnitte 24 vorhanden. Mittels der Flussleitabschnitte 24 wird in dem Reluktanzmotor ein magnetischer Fluss quer zu q-Achsen 30 des Rotors 10 entlang einer magnetischen Vorzugsrichtung ein magnetischer Fluss, der durch elektrische Spulen des Stators erzeugt wird, geleitet.

Durch die Aussparungen 22 ist die mechanische Stabilität jedes Rotorblechs 18 geringer als bei einem Rotorblech, welches als eine (bis auf die Durchgangsöffnung 12) massive Scheibe ausgebildet ist. Bei dem Rotor 10 ist es allerdings dennoch ermöglicht, dass er in dem Reluktanzmotor mit einer Drehzahl von mehr als 5.000 Umdrehungen/Minute, insbesondere bei 10.000 Umdrehungen/Minute und sogar 15.000 Umdrehungen/Minute betrieben wird. Hierzu ist der Rotor 10 mechanisch stabilisiert. Zwischen den einzelnen Schichten 16 ist hierzu jeweils oder bei jeder zweiten oder jeder dritten Schicht eine Einlegscheibe 32 angeordnet. Um die Einlegscheibe 32 besser erkennbar zu machen, ist in FIG 2 der Rotor 10 stark vergrößert gezeigt, so dass lediglich zwei der Rotorbleche 18 gezeigt sind. Der Rotor setzt sich in axialer Richtung entlang der Rotationsachse A jenseits von Bruchlinien 34 weiter fort. Die Einlegscheiben 32 weisen nicht die Aussparungen 22 auf, wie die Rotorbleche 18. Sie erstrecken sich in radialer Richtung 36 senkrecht zur Rotationsachse A durchgehend von der Welle der Reduktanzmaschine bis zu einem äußeren Rand 38 des Blechpakets 14. Die Einlegscheiben 32 überbrücken somit die Durchgangsöffnungen 22. Die Einlegscheiben 32 sind fest mit den Flussleitabschnitten 24 verbunden. Durch die Einlegscheiben 32 kann eine auf die einzelnen Flussleitabschnitte 24 wirkende Fliehkraft bei einer Rotation des Rotors 10 entlang der radialen Richtung 36 zur Welle der elektrischen Maschine hin, d.h. radial nach innen übertragen werden.

Eine Dicke der Einlegscheiben 32 in axialer Richtung beträgt vorzugsweise weniger als 0,1 mm. Jede Einlegscheibe 32 kann beispielsweise aus einer Klebefolie gebildet sein, die auch beispielsweise durch Glasfasern oder Kohlefasern verstärkt sein kann. Es kann als Einlegscheibe 32 auch ein Vlies oder Gewebe aus Fasern, die vorzugsweise aus Glas oder Kohlefasern gebildet sind, bereitgestellt sein. Das Vlies oder Gewebe kann anschließend, nachdem es beim Stapeln der Rotorbleche 18 zwischen diesen angeordnet worden ist, durch Ausgießen oder Tränken mit einem Kunstharz durchsetzt worden sein. Hierbei können dann die Einlegscheiben 32 aufquellen, so dass sich Schwulste 40 in den Aussparungen 22 bilden, in denen die Einlegscheibe 32 in axialer Richtung entlang der Rotationsachse A einen größeren Durchmesser aufweist, also dicker ist als zwischen den Flussleitabschnitten 24. Ein anderes, sehr geeignetes Material zum Bereitstellen der Einlegscheiben 32 ist das Gewebe, welches unter dem Produktnamen "Prepreg" ® des Unternehmens Lange-Ritter erhältlich ist. Es handelt sich hierbei um eine Verstärkungsfaser, die bereits mit Harz imprägniert ist. Bei Erwärmen der Faser verflüssigt sich das Harz für kurze Zeit und durchtränkt die Fasern, bevor es zu härten beginnt. Ein weiteres, sehr geeignetes Gewebe stellt Glasseidengewebe bzw. Glasgewebe dar, wie es beispielsweise von dem Unternehmen HexForce ® angeboten wird.

Bei Verwendung eines Gewebes kann eine zusätzliche Stabilität erzielt werden, wenn die Verlaufsrichtung der Fasern des Gewebes in einem Winkel zwischen 40° bis 50° zu den q-Achsen 30 ausgerichtet wird. In FIG 1 ist hierzu anhand von einzelnen, hervorgehobenen Gewebefasern 42 diese Verlaufsrichtung verdeutlicht. Die Schraffuren in FIG 2 deuten dagegen keinen Faserverlauf an.

Beim Herstellen des Blechpakets 40, wenn das Kunstharz in den Einlegscheiben 32 noch flüssig ist, können axiale Anpresskräfte 44 auf das Blechpaket 14 appliziert werden, so dass die Rotorbleche 18 in einem gewünschten Abstand zueinander angeordnet bleiben, während die Anlegescheiben 32 im Bereich der Wulste 40 aufquellen. Die Wulste 40 weisen den Vorteil auf, dass sich ein Formschluss beim Verspannen des Blechpakets 14 unter Spannung bildet.

Besonders stabil wird das Blechpaket, wenn die Aussparungen 22 ebenfalls mit dem Kunstharz ausgefüllt werden. Hierzu kann beispielsweise wasserdünnes Gießharz verwendet werden, das durch die Einlegscheiben 32 hindurch in die Hohlräume zwischen, den Flussleitabschnitten 24 eindringen kann.

Bei Aushärten des Harzes verknüpfen sich die Einlegescheiben 32 mit den Rotorblechen 18. Dies geschieht je nach Material der Einlegescheiben durch Verkleben und mit sich eventuell zusätzlich bildenden Formschlüssen im Bereich der Wulste 40. Die Flussleitabschnitte 24 werden hierdurch mit den Einlegscheiben 32 zueinander fixiert. Dabei werden die bei hoher Drehzahl des Rotors 10 instabilen Bereiche in den Rotorblechen 18 mit den stabilen, durch einen Gesamtverbund miteinander verknüpft. Im Bereich der Flusssperren, d.h. Aussparungen 22, bildet sich durch Kapitalwirkung eindringendes Gieß- oder Tränkharz zusätzlich der Formschluss bei den Wulsten 40. Um das Eindringen des Harzes zu ermöglichen, ist der optimale Klebespalt, d.h. der Abstand 46 der Flussleitabschnitte benachbarter Rotorbleche 18 im Bereich von 0,1 mm. Handelt es sich hierbei um Gewebe, so wird dies bei Applizieren der Anpresskräfte 44 soweit zusammengedrückt, bis die Glas- oder Kohlefasern fest aufeinander liegen. Dies bestimmt dann den endgültigen Abstand 46. Die Stärke der Einlegeteile sollte möglichst klein sein, jedoch ein Eindringen der Vergussmasse (Harz) durch Kapillarwirkung ermöglichen. Als optimal werden Stärken im Bereich von 20 µm bis 40 µm erachtet.

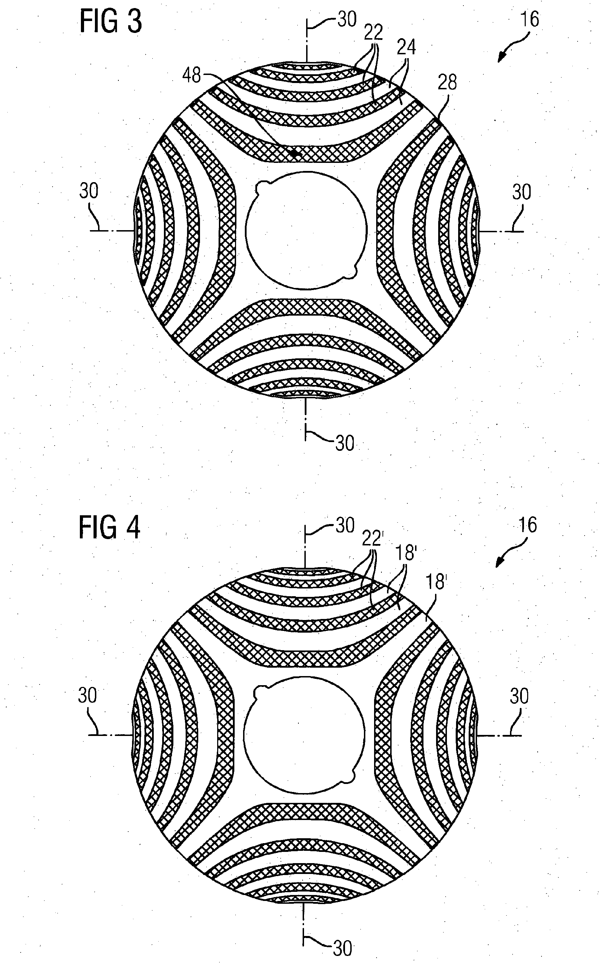

In FIG 3 und FIG 4 sind alternative Ausführungsformen von Rotoren gezeigt, bei welchen einzelne magnetische Schichten 16 anders ausgebildet sind. Diese Ausführungsformen weisen den Vorteil auf, dass die zum Ausbilden der Reluktanz nötige magnetische Flussführung in noch geringerem Maß als bei dem Rotor 10 durch Stützelemente, wie die Stege 26 und den Ring 28 beeinflusst sind. Zur besseren Orientierung sind in FIG 3 und FIG 4 Elemente, welche Elementen in Bezug auf ihre Funktion entsprechen, die in FIG 1 oder FIG 2 gezeigt sind, mit den selben Bezugszeichen wie in FIG 1 bzw. FIG 2 versehen.

In FIG 3 ist eine magnetische Schicht 16 eine magnetische Schicht eines Rotors gezeigt, bei der mehrere Flussleitabschnitte 24 bereitgestellt sind, die ebenfalls durch die Aussparungen 22 voneinander getrennt sind, die aber ausschließlich durch einen äußeren Ring 28 zusammengehalten sind. An den Stellen 48, an welchen bei den Rotorblechen 18 des Rotors 10 die Stege 26 vorhanden sind, ist bei der magnetischen Schicht 16 in FIG 3 ebenfalls ein unmagnetischer Bereich, wie er durch die Aussparungen 22 gebildet ist.

In FIG 4 ist eine magnetische Schicht eines Rotors gezeigt, bei welcher einzelne Flussleitabschnitte aus voneinander getrennten Rotorblechen 18' gebildet sind, zwischen denen sich jeweils unmagnetische Bereiche 22`, also insbesondere Luft- oder Kunstharz befinden.

Ein Rotor mit magnetischen Schichten 16, wie sie in FIG 4 gezeigt ist, kann beispielsweise aus einem Rotor mit einer magnetischen Schicht gebildet werden, wie sie in FIG 3 gezeigt ist. Indem ein Rotor aus FIG 3 durch ein spanendes Verfahren des Außenrings 28 abgetragen wird, nachdem die einzelnen magnetischen Schichten durch die Einlegscheiben 32 miteinander fixiert worden sind, erhält man einen Rotor mit einer magnetischen Schicht 16, wie sie in FIG 4 dargestellt ist.

Durch die Beispiele ist gezeigt, wie man bei einem Reluktanzmotor die folgenden Vorteile erlangen kann. Es erhöht sich die Drehzahltauglichkeit des Rotors 10. Die Stegbreite der verbindenden Stege an dem Außendurchmesser entlang der Außenseite 38, also der Außenring 28, kann sehr klein sein. Es kann auch auf Stege zwischen den Flussleitabschnitten 24 verzichtet werden, wie es in FIG 3 und FIG 4 gezeigt ist. Die zum Anpassen des Außendurchmessers des Rotors 10 an einen Stator nötige spanende Bearbeitung am Außendurchmesser des Rotors 10 ist durch die erhöhte Stabilität des Blechpakets 14 einfacher und kann damit kostengünstiger durchgeführt werden. Da auf eine Bandage zum Stabilisieren des Blechpakets 14, die um das Blechpaket 14 gewickelt werden muss, verzichtet werden kann, ergibt sich ein optimierter Luftspalt bei dem Reluktanzmotor. Die Einlegscheiben 32 können auch als die beschriebene elektrische Isolierung der Einzelbleche 18 zueinander verwendet werden. Dann müssen die Rotorbleche 18 nicht zusätzlich lackiert sein. Das Blechpaket 14 des Rotors 10 weist eine verbesserte Biegeeigenfrequenz am Läufer durch den Gesamtverbund auf, wodurch sich das Rotor-Blechpaket 14 auch dazu eignet, die Welle des Reluktanzmotors zu stabilisieren. Auch ergibt sich hierdurch eine Reduktion der Torsionsschwingungen bei einem Betrieb des Reluktanzmotors. Durch die Wahl der Anzahl der Einlegescheiben 32 kann eine modulare Drehzahleignung eingestellt werden. Für höchste Stabilität sollte ein Einlegescheibe zwischen allen Schichten 16 bereitgestellt, für eine geringere Drehzahlfestigkeit reicht es, Einlegescheiben zwischen jeder zweiten oder auch nur zwischen jeder dritter und vierter Schicht. Es ist sogar in einer Ausführungsform der Erfindung ein Verzicht auf die äußeren Stege, d.h. den Außenring 28 zwischen den Flussleitabschnitten 24 möglich, wie dies in FIG 4 gezeigt ist, da der komplette Verbund durch die Einlegescheiben in sich fixiert, d.h. getragen ist.

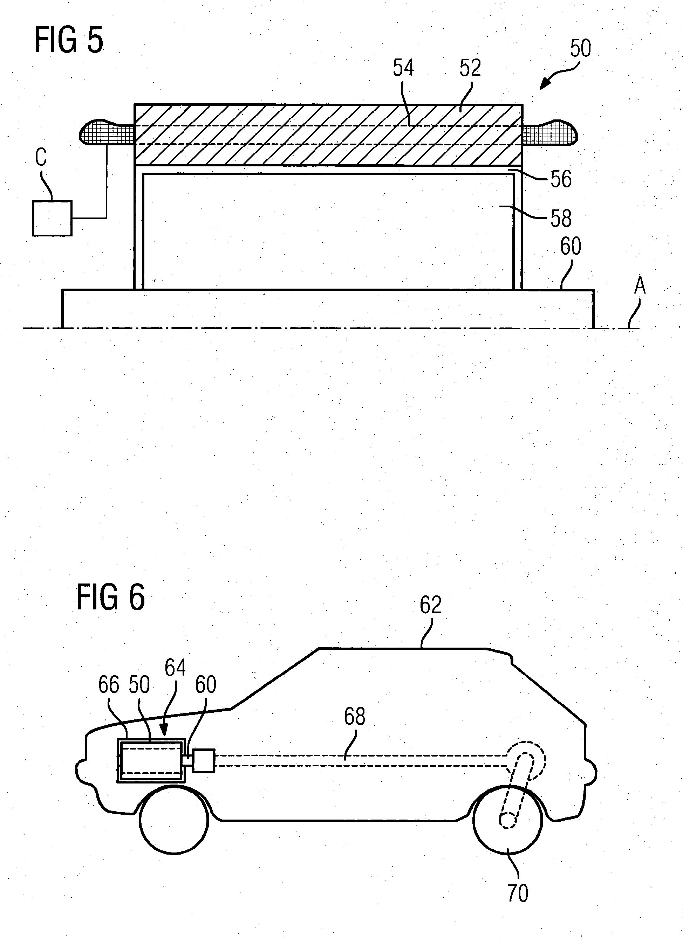

In FIG 5 ist eine elektrische Maschine 50 gezeigt, bei der es sich vorzugsweise um einen Reluktanzmotor handelt. In FIG 5 stellt die Rotationsachse A auch eine Symmetrieachse dar. Die elektrische Maschine 50 ist insbesondere als elektrischer Antriebsmotor für ein Kraftfahrzeug, insbesondere einen Kraftwagen, ausgestaltet. Die elektrische Maschine 50 umfasst einen Stator 52, in dem Wicklungen 54 elektrischer Spulen angeordnet sind, wobei in FIG 5 nur eine der Wicklungen 54 dargestellt ist. Die Wicklungen 54 werden durch einen Umrichter C abwechselnd bestromt, wodurch im Inneren des Stators 52 ein magnetisches Drehfeld in einem Luftspalt 56 der elektrischen Maschine 50 entsteht. Im Inneren des Stators 52 befindet sich ein Rotor 58, der drehfest mit einer Welle 60 verbunden ist. Die Welle 60 ist um eine Rotationsachse A drehbar in dem Stator 52 gelagert. Der Rotor 58 ist eine Ausführungsform des erfindungsgemäßen Rotors, beispielsweise der Rotor 10.

In FIG 6 ist in schematischer Darstellung ein Kraftfahrzeug 62 gezeigt, das beispielsweise ein Personenkraftwagen sein kann. Das Kraftfahrzeug 62 weist einen elektrischen Antriebsmotor 64 auf, in dessen Gehäuse 66 sich beispielsweise die elektrische Maschine 50 oder eine andere Ausführungsform der erfindungsgemäßen elektrischen Maschine befinden kann. Die Welle 60 der elektrischen Maschine 42 kann z.B. mit einem Antriebsstrang 68 des Kraftfahrzeugs 62 gekoppelt sein. Der Antriebsstrang 68 kann beispielsweise ein Hinterrad 70 des Kraftwagens 62 antreiben.

## Patentansprüche

1. Rotor (10) für einen Reluktanzmotor (50), wobei der Rotor (10) ein Blechpaket (14) aus mehreren elektrisch voneinander isolierten, sich radial (36) von einer Rotationsachse (A) des Rotors (10) weg erstreckenden Schichten (16) aufweist, wobei jede Schicht (16) zumindest ein magnetisch leitfähiges Rotorblech (18, 18') aufweist und in jeder Schicht (16) durch das zumindest eine Rotorblech (18, 18') insgesamt mehrere Flussleitabschnitte (24) gebildet sind, die voneinander durch einen unmagnetischen Bereich (22, 22') getrennt sind, wobei zwischen zumindest zwei der Schichten (16) eine Einlegscheibe (32) angeordnet ist, welche jeweils mit zumindest zwei Flussleitabschnitten (24) einer der Schichten (16) oder beider Schichten (16), zwischen denen sie angeordnet ist, verbunden ist und hierdurch diese Flussleitabschnitte (24) über den zwischen ihnen befindlichen unmagnetischen Bereich (22, 22') hinweg miteinander verbindet
**dadurch gekennzeichnet, dass**
die Einlegscheibe (32) ein Gewebe mit Fasern (42) umfasst, die zu einer bestimmungsgemäßen q-Achse (30) des Blechpakets (14) in einem Winkel ausgerichtet sind, welcher in einem Bereich von 40° bis 50°liegt, und/oder
die Einlegscheibe (32) in dem unmagnetischen Bereich (22, 22') zwischen zwei Flussleitabschnitten (24), die sie verbindet, dicker (40) ist als an den Flussleitabschnitten (24) und hierdurch in radialer Richtung (36) einen Formschluss mit den Flussleitabschnitten (24) bildet.

2. Rotor (10) nach Anspruch 1, wobei die Einlegscheibe (32) aus einem unmagnetischen Material gebildet ist.

3. Rotor (10) nach einem der vorhergehenden Ansprüche, wobei die Einlegescheibe (32) eine Dicke (46) von weniger als 0,2mm aufweist.

4. Rotor (10) nach einem der vorhergehenden Ansprüche, wobei die Einlegscheibe (32) eine Folie aus einem Polymer umfasst.

5. Rotor (10) nach einem der vorhergehenden Ansprüche, wobei die Einlegscheibe (32) ein mit einem Kunstharz vergossenes Gewirke oder Gewebe umfasst.

6. Rotor (10) nach einem der vorhergehenden Ansprüche, wobei die Einlegscheibe (32) durch Verkleben mit den Flussleitabschnitten (24) verbunden ist.

7. Rotor (10) nach einem der vorhergehenden Ansprüche, wobei die Einlegscheibe (32) ein Gewebe mit Fasern (42) umfasst, die zu einer bestimmungsgemäßen q-Achse (30) des Blechpakets (14) in einem Winkel ausgerichtet sind, welcher bei 45° liegt.

8. Rotor (10) nach einem der vorhergehenden Ansprüche, wobei zumindest eine der Schichten (116) mehrere, voneinander getrennte Rotorbleche (18') aufweist, von denen jedes einen der Flussleitabschnitte (24) der Schicht (16) bildet.

9. Rotor (10) nach einem der vorhergehenden Ansprüche, wobei zwischen mehreren der Schichten (16), insbesondere zwischen allen Schichten (16), jeweils eine Einlegscheibe (32) der genannten Art angeordnet ist.

10. Reluktanzmotor (42) mit einem Rotor (50) nach einem der vorhergehenden Ansprüche.

11. Kraftfahrzeug (62) mit einem Reluktanzmotor (50) nach Anspruch 10 als Antriebsmotor für eine Fahrt des Kraftfahrzeugs (62) .

12. Verfahren zum Herstellen eines Rotors (10) gemäß einem der Ansprüche 1 bis 10, wobei zum Bilden jeder magnetischen Schicht (16) des Blechpakets (14) jeweils ein magnetisch leitfähiges Blech (18) bereitgestellt wird, welches die Flussleitabschnitte (24) der Schicht (16) aufweist und bei welchem als die unmagnetischen Bereiche (22, 22') zwischen den Flussleitabschnitten (24) Aussparungen vorgesehen sind, und die Bleche (18) zu dem Blechpaket (18) aufgefädelt werden und hierbei zwischen zumindest zwei der Bleche (18) jeweils eine Einlegscheibe (32) angeordnet und mit zumindest einem der angrenzenden Bleche (18) verbunden wird,
**dadurch gekennzeichnet, dass** beim Auffädeln als Einlegscheibe (32) jeweils ein Gewirke oder ein Gewebe zwischen die zwei Bleche (18) angeordnet wird und nach dem Auffädeln aller Bleche (18) das Gewirke oder Gewebe mit einem Kunstharz getränkt wird und hierdurch dann zwischen den Flussleitabschnitten in den unmagnetischen Bereichen aufquillt und so dicker wird.

13. Verfahren nach Anspruch 12, wobei nach dem Auffädeln der Bleche (18) ein Außenring (28) jedes magnetisch leitfähigen Blechs (18) durch ein spanendes Verfahren entfernt wird und hierdurch jedes der Bleche (18) in mehrere voneinander getrennte Rotorbleche (18') aufgetrennt wird.

## Claims

1. Rotor (10) for a reluctance motor (50), wherein the rotor (10) has a laminated core (14) comprising a number of layers (16) electrically insulated from one another, extending radially (36) away from an axis of rotation (A) of the rotor (10), wherein each layer (16) has at least one magnetically-conductive rotor sheet (18, 18') and in each layer (16) overall a number of flux guidance sections (24) are formed by the at least one rotor sheet (18, 18'), which are separated from one another by a non-magnetic area (22, 22'), wherein an insert disk (32) is disposed between at least two of the layers (16), which is linked in each case to at least two flux guidance sections (24) of one of the layers (16) or of both layers (16), between which it is disposed and through this connects these flux guidance sections (24) to each other across the non-magnetic area (22, 22') located between them **characterised in that** the insert disc (32) is a weave with fibres (42) which is aligned in relation to a specified q-axis (30) of the laminated core (14) at an angle ranging between 40° an 50°, and/or
the insert disc (32), in the non-magnetic area (22, 22') between two flux guidance sections (24) which it connects, is thicker (40) than at the flux guidance sections (24) and through this makes a form fit with the flux guidance sections (24) in the radial direction (36).

2. Rotor (10) according to 1, wherein the insert disc (32) is made of a non-magnetic material.

3. Rotor (10) according to one of the preceding claims, wherein the insert disc (32) has a thickness (46) of less than 0.2mm.

4. Rotor (10) according to one of the preceding claims, wherein the insert disc (32) comprises a film made of a polymer.

5. Rotor (10) according to one of the preceding claims, wherein the insert disc (32) comprises a resin-bonded knitted or woven fabric.

6. Rotor (10) according to one of the preceding claims, wherein the insert disc (32) is connected to the flux guidance sections (24) by gluing.

7. Rotor (10) according to one of the preceding claims, wherein the insert disc (32) comprises a weave with fibres (42) which is aligned in relation to a specified transverse axis (30) of the laminated core (14) at an angle which lies at 45°.

8. Rotor (10) according to one of the preceding claims, wherein at least one of the layers (16) has a number of rotor sheets (18') separated from one another, of which each forms one of the flux guidance sections (24) of the layer (16).

9. Rotor (10) according to one of the preceding claims, wherein an insert disc (32) of the said type is disposed in each case between a number of the layers (16), especially between all layers (16).

10. Reluctance motor (42) with a rotor (50) according to one of the preceding claims.

11. Motor vehicle (62) with a reluctance motor (50) according to claim 10 as a drive motor for driving the motor vehicle (62).

12. Method for manufacturing a rotor (10) according to one of claims 1 to 10, wherein, for forming each magnetic layer (16) of the laminated core (14), a conductive metal sheet (18) is provided, which has the flux guidance sections (24) of the layer (16) and in which cutouts are provided as the non-magnetic areas (22, 22') between the flux guidance sections (24), and the metal sheets (18) are fitted into the laminated core (18) and in this process one insert disc (32) is disposed in each case between at least two of the sheets (18) and is connected to at least one of the adjoining sheets (18), **characterised in that**, during fitting, a knitted fabric or a woven fabric is disposed in each case between the two metal sheets (18) as an insert disc (32) and after fitting of all sheets (18), the knitted fabric or a woven fabric is impregnated with a synthetic resin and through this penetrates between the flux guidance sections into the non-magnetic areas and thus becomes thicker.

13. Method according to claim 12, wherein after the fitting of the metal sheets (18), an outer ring (28) of each magnetically-conductive sheet (18) is removed by a metal-cutting method and through this each of the metal sheets (18) is separated into a number of rotor sheets (18') separated from one another.

## Revendications

1. Rotor ( 10 ) pour un moteur ( 50 ) à réluctance, le rotor ( 10 ) ayant un paquet ( 14 ) de tôles composé de plusieurs couches ( 16 ) isolées électriquement les unes des autres et s'éloignant radialement ( 36 ) d'un axe ( A ) de rotation du rotor ( 10 ), chaque couche ( 16 ) ayant au moins une tôle ( 18, 18' ) de rotor conductrice magnétiquement et il est formé dans chaque couche ( 16 ), par la au moins une tôle ( 18, 18' ) de rotor, en tout plusieurs tronçons ( 24 ) de conduite du flux, qui sont séparés les uns des autres par une région ( 22, 22' ) amagnétique, dans lequel il est disposé entre deux des couches ( 16 ), un disque ( 32 ) d'insertion, qui est relié respectivement à au moins deux tronçons ( 24 ) de conduite du flux de l'une des couches ( 16 ) ou des deux couches ( 16 ), entre lesquelles il est disposé et qui relie ainsi entre eux ces tronçons ( 24 ) de conduite du flux, par la région ( 22, 22' ) amagnétique se trouvant entre eux, **caractérisé en ce que**
le disque ( 32 ) d'insertion comprend un tissu ayant des fibres ( 42 ), qui sont orientées en faisant, par rapport à un axe ( 30 ) q par définition du paquet ( 14 ) de tôles, un angle qui est dans une plage allant de 40° à 50° et/ou le disque ( 32 ) d'insertion est dans la région ( 22, 22' ) amagnétique, entre deux tronçons ( 24 ) du flux qu'il relie, plus épais ( 40 ) que sur les tronçons ( 24 ) de conduite du flux et forme ainsi dans la direction ( 36 ) radiale, une complémentarité de forme avec les tronçons ( 24 ) de conduite du flux.

2. Rotor ( 10 ) suivant la revendication 1, dans lequel le disque ( 32 ) d'insertion est en un matériau amagnétique.

3. Rotor ( 10 ) suivant l'une des revendications précédentes, dans lequel le disque ( 32 ) d'insertion a une épaisseur ( 46 ) de moins de 0,2 mm.

4. Rotor ( 10 ) suivant l'une des revendications précédentes, dans lequel le disque ( 32 ) d'insertion comprend une feuille en un polymère.

5. Rotor ( 10 ) suivant l'une des revendications précédentes, dans lequel le disque ( 32 ) d'insertion comprend un tricot ou un tissu enrobé d'une résine synthétique.

6. Rotor ( 10 ) suivant l'une des revendications précédentes, dans lequel le disque ( 32 ) d'insertion est relié par collage aux tronçons ( 24 ) de conduite du flux.

7. Rotor ( 10 ) suivant l'une des revendications précédentes, dans lequel le disque ( 32 ) d'insertion comprend un tissu ayant des fibres ( 42 ), qui font, par rapport à un axe ( 30 ) q par définition du paquet ( 14 ) de tôles, un angle qui est de 45°.

8. Rotor ( 10 ) suivant l'une des revendications précédentes, dans lequel au moins l'une des couches ( 16 ) a plusieurs tôles ( 18' ) de rotor séparées les unes des autres, dont chacune forme l'un des tronçons ( 24 ) de conduite du flux de la couche ( 16 ).

9. Rotor ( 10 ) suivant l'une des revendications précédentes, dans lequel il est disposé respectivement un disque ( 32 ) d'insertion du type mentionné entre plusieurs des couches ( 16 ), notamment entre toutes les couches ( 16 ).

10. Moteur ( 42 ) à réluctance ayant un rotor ( 50 ) suivant l'une des revendications précédentes.

11. Véhicule ( 62 ) automobile ayant un moteur ( 50 ) à réluctance suivant la revendication 10 comme moteur de traction pour une marche du véhicule ( 62 ) automobile.

12. Procédé de fabrication d'un rotor ( 10 ) suivant l'une des revendications 1 à 10, dans lequel, pour former chaque couche ( 16 ) magnétique du paquet ( 14 ) de tôles, on se procure respectivement une tôle ( 18 ) conductrice magnétiquement, qui a les tronçons ( 24 ) de conduite du flux de la couche ( 16 ) et pour laquelle il est prévu, comme région ( 22, 22' ) amagnétique entre les tronçons ( 24 ) de conduite du flux, des évidements et les tôles ( 18 ) sont enfilées en le paquet ( 18 ) de tôles et il est disposé ainsi, entre au moins deux des tôles ( 18 ), respectivement un disque ( 32 ) d'insertion, qui est relié à au moins l'une des tôles ( 18 ) voisines, **caractérisé en ce que**, lors de l'enfilage, il est mis comme disque ( 32 ) d'insertion respectivement un tricot ou un tissu entre les deux tôles ( 18 ) et, après l'enfilage de toutes les tôles ( 18 ), le tricot ou le tissu est imprégné d'une résine synthétique et ainsi foisonne alors entre les tronçons de conduite de flux dans les régions amagnétiques et ainsi devient plus épais.

13. Procédé suivant la revendication 12, dans lequel, après l'enfilage des tôles ( 18 ), on élimine une bague ( 28 ) extérieure de chaque tôle ( 18 ) conductrice magnétiquement par un procédé d'enlèvement de copeaux et on sépare ainsi chacune des tôles ( 18 ) en plusieurs tôles ( 18' ) du rotor séparées les unes des autres.
